# EUROPÄISCHE PATENTSCHRIFT

(11) **EP 1 219 882 B1**
(45) Veröffentlichungstag und Bekanntmachung des Hinweises auf die Patenterteilung: **02.02.2005**
(21) Anmeldenummer: 01124842.4
(22) Anmeldetag: 18.10.2001
(51) Int. Cl.: F16L 11/15

(54) **Flexibles Leitungsrohr**
Flexible conduit
Conduit flexible

(30) Priorität: 17.11.2000 DE 10057214
(43) Veröffentlichungstag der Anmeldung: 03.07.2002
(73) Patentinhaber: BRUGG Rohr AG, Holding, 5200 Brugg (CH)
(72) Erfinder: Bittner, Herbert, 31515 Wunstorf (DE); Krüger, Hartmut, 30457 Hannover (DE)

(56) Entgegenhaltungen:
- DE-A- 3 344 544
- FR-A- 2 759 141
- US-A- 3 473 575
- US-A- 3 831 636
- US-A- 4 344 462

## Beschreibung

Die Erfindung betrifft ein flexibles Leitungsrohr für den Transport unter Druck stehender Fluide nach dem Oberbegriff des Anspruchs 1.

Für die Betankung von Kraftfahrzeugen mit verflüssigten Kohlenwasserstoffen oder reinem verflüssigtem Wasserstoff werden flexible Leitungen benötigt, welche Drücken von mehr als 30 bar bei Betriebstemperaturen von +40 bis -50°C standhalten können.

Kunststoffe aber auch Gummi sind ungeeignet, da sie bei niedrigen Temperaturen brüchig werden. Darüber hinaus sind Leitungsrohre aus diesen Werkstoffen nicht in der Lage, die geforderten hohen Drücke auszuhalten.

Es sind gewellte Metallrohre bekannt, die aufgrund der Wellung sehr flexibel sind. Diese Wellrohre werden üblicherweise durch Formen eines dünnwandigen Metallbandes zu einem Schlitzrohr, Verschweißen der Längsnaht und anschließendes Wellen hergestellt. Der Nachteil dieser gewellten Metallrohre besteht darin, daß je nach Wanddicke des gewellten Rohres dieses bei Überschreiten eines Innendrucks von ca 5 bar beginnt sich zu längen.

Um diesen Nachteil zu überwinden, ist bereits vorgeschlagen worden, ein metallisches Geflecht auf das gewellte Metallrohr aufzubringen. Diese Vorgehensweise ist jedoch wegen der geringen Fertigungsgeschwindigkeit recht kostspielig.

Aus dem DE-GM 91 08 303 ist ein gewelltes Metallrohr bekannt, bei welchem eine Längung infolge einer Druckbeaufschlagung dadurch verhindert wird, daß eine Bewicklung aus einem Gewebeband aus zugfesten Fäden vorgesehen wird. Die Fäden können aus Kunststoff oder Textil bestehen. Auch können zusätzlich Metallfäden vorhanden sein. Es hat sich jedoch gezeigt, daß dieses Leitungsrohr nicht die erforderlichen hohen Drücke bei den niedrigen Temperaturen aufnehmen kann.

Aus der DE-A-33 44 544 ist ein flexibles gewelltes metallisches Leitungsrohr für den Transport von Fluiden bekannt. Zur Erhöhung der Druckbeständigkeit und zur Vermeidung einer Längsdehnung infolge eines hohen Innendrucks im Rohr wird eine aus einer Vielzahl von Metalldrähten bestehende Armierungslage mit wechselnder Schlagrichtung auf das gewellte Metallrohr aufgebracht. Auf diese Armierungslage wird ein weiterer Metalldraht mit Vorspannung mit einer kurzen Schlaglänge aufgebracht, der die einzelnen Drähte der Armierungslage fest auf das gewellte Metallrohr aufspannt, so daß ein verstärkter Reibungsschluß entsteht, der eine Ausdehnung des Wellrohres bei erhöhtem Innendruck weitestgehend verhindert.

Die US-A-3 831 636 offenbart ein armiertes gewelltes Metallrohr, welches eine erste Lage aus flachen Metallstreifen aufweist, welche schraubenlinienförmig auf das gewellte Metallrohr aufgelegt sind. Über der ersten Lage aus flachen Metallstreifen ist ein weiteres gewelltes Metallrohr vorgesehen, wobei die nach innen gerichteten Wellenberge fest auf den Metallstreifen der ersten Lage liegen. Zwischen der ersten Lage aus Metallstreifen und dem äußeren gewellten Metallrohren kann noch eine zweite Lage aus Metallstreifen vorgesehen sein. Bei diesem Leitungsrohr soll die erste Lage lediglich durch die nach innen gerichteten Wellenberge in Reibungsschluß mit dem inneren gewellten Rohr gebracht werden.

Der vorliegenden Erfindung liegt die Aufgabe zugrunde, ein gewelltes Metallrohr bereitzustellen, welches einem Innendruck von 30 bar kurzzeitig bis zu 40 bar standhalten kann, wobei das in dem Metallrohr befindliche Medium eine Temperatur von weniger als - 40 °C aufweisen kann.

Diese Aufgabe wird durch die im Anspruch 1 erfaßten Merkmale gelöst.

Das Leitungsrohr nach der Lehre der Erfindung ist insbesondere zur Verbindung von entfernt liegenden Lagertanks mit den Zapfsäulen einer Tankstelle geeignet. Insbesondere dient das Leitungsrohr zum Transport von Propan und/oder Butan bzw. auch Gemischen dieser Kohlenwasserstoffe, die bei der Erdölraffenerie anfallen und bislang dort abgefackelt wurden.

Alle metallischen Teile des erfindungsgemäßen Leitungsrohres bestehen mit besonderem Vorteil aus rostfreiem Stahl, um eine Korrosion zu verhindern.

Die Flexibilität des Leitungsrohres ermöglicht zum einen eine Fertigung und einen Transport des Leitungsrohres in großen Längen, so daß die bei Kurzlängen anfallenden Verbindungsstellen entbehrlich sind, zum anderen eine schnelle Verlegung mit Krümmungen im Verlauf der Trasse.

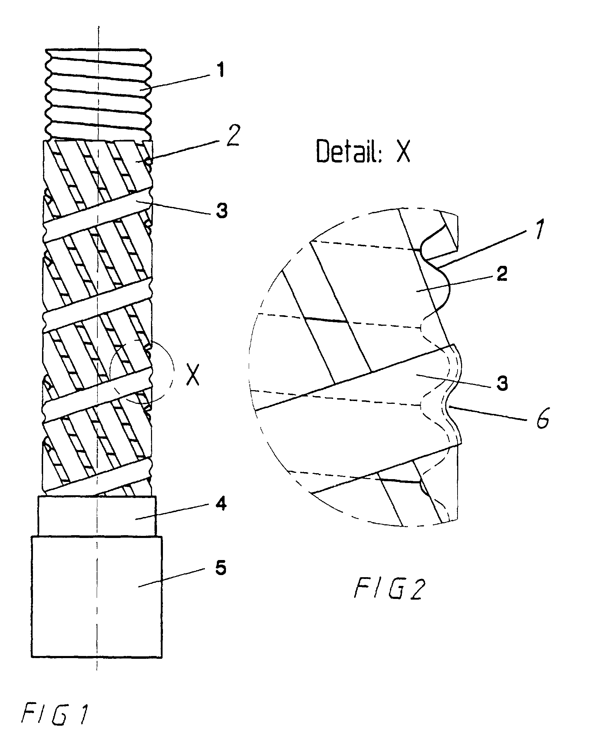

Die Erfindung ist anhand der in den Figuren 1 und 2 schematisch dargestellten Ausführungsbeipiele näher erläutert.

In der Figur 1 ist eine seitliche Ansicht des erfindungsgemäßen Leitungsrohr abgesetzt dargestellt.

Das Leitungsrohr besteht aus einem gewellten Innenrohr 1 aus rostfreiem Stahl, auf welches eine erste Armierungslage aus einer Vielzahl von flachen Metallbändern 2 mit einer großen Schlaglänge aufgelegt ist. Die Schlaglänge 1 liegt zwischen 2 und 10 D, wobei D der Außendurchmesser des Innenrohres 1 ist. Die flachen Metallbänder 2 bestehen ebenfalls aus rostfreiem Stahl und umgeben das Innenrohr 1 mit einer Bedeckung zwischen 50 und 70 %.

Eine zweite Armierungslage besteht aus einem mit kurzer Schlaglänge auf die erste Armierungslage aufgebrachten flachen Metallband 3 ebenfalls aus rostfreiem Stahl, welches mit Vorspannung auf die erste Armierungslage aufgebracht wird, so daß die erste Armierungslage fest auf der Oberfläche des Innenrohres 1 aufliegt. Mit 4 ist eine Schicht aus einer bitumenhaltigen Korrosionsschutzmasse bezeichnet, welche die Zwischenräume zwischen dem Innenrohr 1 und den Metallbändern 2 und 3 ausfüllt. Über der Schicht 4 ist ein Außenmantel 5 aus Kunststoff, vorzugsweise Polyethylen vorgesehen.

In der Figur 2 ist ein vergrößerter Ausschnitt dargestellt, welcher das Zusammenwirken der Metallbänder 2 und 3 mit dem Innenrohr 1 zeigt.

Die Schlaglänge des Metallbandes 3 unterscheidet sich von der Schlaglänge der Metallbänder 2. Vorzugsweise ist die Schlagrichtung des Metallbandes 3 der Schlagrichtung der Metallbänder 2 entgegengesetzt. Für den Fall, daß das Innenrohr 1 ein schraubenlinienförmig gewelltes Rohr ist, ist die Schlagrichtung der Metallbänder 2 der Wellsteigung des Innenrohres 1 entgegengesetzt, wogegen die Schlagrichtung des Metallbandes 3 der Richtung der Wellsteigung des Innenrohres 1 entspricht.

Mit Vorteil unterscheidet sich die Schlaglänge des Metallbandes 3 nicht wesentlich von der Wellsteigung des Innenrohres 1. Auf diese Weise werden die Metallbänder 2 der ersten Armierungslage durch das mit Vorspannung aufgebrachte Metallband 3 an mehreren über den Umfang des Innenrohres verteilt angeordneten Stellen in das zwischen zwei Wellenkuppen befindliche schraubenlinienförmig verlaufende Wellental - wie bei 6 dargestellt- eingeformt. Dadurch entsteht eine formschlüssige Verbindung der Metallbänder 2 und 3 mit dem Innenrohr 1. Zusätzlich werden die Metallbänder 2 in ihrer Längsrichtung vorgespannt, wodurch eine Längung des Innenrohres 1 bei Innendruckbeaufschlagung verhindert wird. Die Metallbänder 2 der ersten Armierungslage erhöhen infolge des hohen Bedeckungsgrades den zulässigen Berstdruck des Leitungsrohres.

## Patentansprüche

1. Flexibles Leitungsrohr für den Transport von unter hohem Druck stehenden Fluiden, vorzugsweise Flüssiggasleitung, bestehend aus
a) einem mediumführenden gewellten Metallrohr (1),
b) einer ersten Lage aus einer Vielzahl von mit großer Schlaglänge auf dem gewellten Metallrohr aufliegenden Armierungselementen (2),
c) einer zweiten Lage aus einem Armierungselement (3), welches mit einer wesentlich kürzeren Schlaglänge als die Armierungselemente (2) der ersten Lage mit Vorspannung auf die erste Lage aufgebracht ist, so daß zumindest abschnittsweise ein oder mehrere Armierungselemente (2) der ersten Lage zwischen zwei Wellenbergen des gewellten Metallrohres (1) eingeformt und vorgespannt werden, und
d) einen Außenmantel aus Kunststoff (5),
**dadurch gekennzeichnet, daß** die Armierungselemente (2) der ersten und das Armierungselement (3) der zweiten Lage Metallbänder sind und die Schlagrichtung des Metallbandes (3) der zweiten Lage die gleiche ist wie die Wellsteigung, und die Schlaglänge des Metallbandes (3) der zweiten Lage einen Wert aufweist, der zwischen dem Ein- und Fünffachen der Wellsteigung liegt.

2. Leitungsrohr nach Anspruch 1, **dadurch gekennzeichnet, daß** der Zwischenraum zwischen dem gewellten Metallrohr (1) und dem Außenmantel (5) aus Kunststoff zumindest teilweise mit einer Füllmasse (4) auf der Basis von Bitumen ausgefüllt ist.

3. Leitungsrohr nach Anspruch 1 oder 2, **dadurch gekennzeichnet, daß** das gewellte Metallrohr (1), die Metallbänder (2) der ersten Lage und das Metallband (3) der zweiten Lage aus rostfreiem Stahl bestehen.

4. Leitungsrohr nach einem der Ansprüche 1 bis 3, **dadurch gekennzeichnet, daß** das gewellte Metallrohr (1) ein längsnahtgeschweißtes und schraubenlinienförmig gewelltes Metallrohr ist.

5. Leitungsrohr nach einem der Ansprüche 1 bis 4, **dadurch gekennzeichnet, daß** die zweite Lage eine der ersten Lage gegenläufige Schlagrichtung aufweist.

6. Leitungsrohr nach einem der Ansprüche 1 bis 5, **dadurch gekennzeichnet, daß** die Bedeckung der ersten Lage 50-70 % beträgt.

## Claims

1. Flexible conduit for transporting fluids under high-pressure, preferably a liquid gas conduit, consisting of
a) a medium-conducting corrugated metal pipe (1),
b) a first layer consisting of numerous reinforcing elements (2) with a large length of lay lying on the corrugated metal pipe,
c) a second layer consisting of a reinforcing element (3) that is applied pretensioned onto the first layer with a substantially shorter length of lay than the reinforcing elements (2) so that at least sections of one or more reinforcement elements (2) of the first layer are shaped and pretensioned between two corrugation peaks of the corrugated metal pipe (1), and
d) an outer sheath of plastic (5),
**characterized in that** the reinforcing elements (2) of the first layer and the reinforcing element (3) of the second layer are metal strips, and the direction of lay of the metal strip (3) of the second layer is the same as the corrugation pitch, and the length of lay of the metal strip (3) of the second layer is one to five times that of the corrugation pitch.

2. Conduit according to claim 1, **characterized in that** the gap between the corrugated metal pipe (1) and the outer sheath (5) consisting of plastic is at least partially filled with a filler (4) based on bitumen.

3. Conduit according to claim 1 or 2, **characterized in that** the corrugated metal pipe (1), the metal strips (2) of the first layer, and the metal strip (3) of the second layer consist of stainless steel.

4. Conduit according to one of claims 1 to 3, **characterized in that** the corrugated metal pipe (1) is a helically corrugated metal pipe with a welded lengthwise seam.

5. Conduit according to one of claims 1 to 4, **characterized in that** the second layer has a direction of lay opposite that of the first layer.

6. Conduit according to one of claims 1 to 5, **characterized in that** the coverage of the first layer is 50-70%.

## Revendications

1. Tuyau de conduite flexible pour le transport de fluides sous haute pression, de préférence conduite de gaz liquéfié, se composant
a. d'un tube métallique (1) ondulé conduisant du fluide,
b. d'une première couche composée d'une pluralité d'éléments de renforcement (2) avec grand pas de câblage reposant sur le tube métallique ondulé,
c. d'une seconde couche composée d'un élément de renforcement (3) pré-tendu, posé sur la première couche avec un pas de câblage pour l'essentiel plus court que les éléments de renforcement (2) de la première couche de manière à ce qu'au moins par sections, un ou plusieurs éléments de renforcement (2) de la première couche soient moulés et précontraints entre deux crêtes d'ondulation du tube métallique (1) ondulé, et
d. d'une gaine extérieure en plastique (5),
**caractérisé en ce que** les éléments de renforcement (2) de la première couche et l'élément de renforcement (3) de la seconde couche sont des bandes métalliques et le sens de câblage de la bande métallique (3) de la seconde couche est le même que le pas d'ondulation, et le pas de câblage de la bande métallique (3) de la seconde couche présente une valeur qui est comprise entre une fois et cinq fois le pas d'ondulation.

2. Tuyau de conduite selon la revendication 1, **caractérisé en ce que** l'espace entre le tube métallique ondulé (1) et la gaine extérieure (5) en plastique est rempli au moins en partie d'une masse de remplissage (4) à base de bitume.

3. Tuyau de conduite selon la revendication 1 ou 2, **caractérisé en ce que** le tube métallique ondulé (1), les bandes métalliques (2) de la première couche et la bande métallique (3) de la seconde couche sont en acier inoxydable.

4. Tuyau de conduite selon l'une quelconque des revendications 1 à 3, **caractérisé en ce que** le tube métallique ondulé (1) est un tube métallique ondulé à soudage longitudinal continu et de forme hélicoïdale.

5. Tuyau de conduite selon l'une quelconque des revendications 1 à 4, **caractérisé en ce que** la seconde couche présente un sens de câblage en sens contraire de la première couche.

6. Tuyau de conduite selon l'une quelconque des revendications 1 à 5, **caractérisé en ce que** le recouvrement de la première couche atteint 50 à 70%.
